# EUROPÄISCHE PATENTANMELDUNG

(11) **EP 4 160 080 A1**
(43) Veröffentlichungstag der Anmeldung: **05.04.2023**
(21) Anmeldenummer: 21200358.6
(22) Anmeldetag: 30.09.2021
(51) Int. Cl.: F21S 8/02, F21V 5/00, F21V 5/04, F21V 7/00, G02B 19/00, F21Y 115/10

(54) **ASYMMETRISCHE LINSE MIT RUNDEM TIR-TEIL UND MIT TEILWEISE DOPPELTER TOTALREFLEXION**

(71) Anmelder: Siteco GmbH, 83301 Traunreut (DE)
(72) Erfinder: Eichele, Timo, 83362 Surberg (DE); Hösle, Tobias, 83329 Waging (DE)
(74) Vertreter: Schmidt, Steffen

(57) **Zusammenfassung**

Asymmetrische Linse (8) mit einer Lichteintrittsfläche (6) und einer gegenüberliegenden Lichtaustrittsfläche (7), die beide so geformt sind, dass ein Lichtanteil einer Lichtquelle, der in die Lichteintrittsfläche (6) eintritt, die Lichtaustrittsfläche (7) nach Lichtbrechung ohne Totalreflexion verlässt,

dadurch gekennzeichnet, dass die Lichtaustrittsfläche (7) ohne Totalreflexion umgeben ist von zwei unterschiedlich ausgebildeten Randbereichen, die für Totalreflexion eingerichtet sind,

wobei ein erster Randbereich einen runden Total Internal Reflection, TIR, -Teil aufweist, der gegenüber der Lichteintrittsfläche (6) so eingerichtet ist, dass Licht, welches durch die Lichteintrittsfläche (6) in die Linse eintritt und auf den runden TIR-Teil (2) auftrifft, nur einmal totalreflektiert wird, bevor das Licht die Linse verlässt, und

der zweite Randbereich einen Doppel-TIR-Teil mit einem ersten und zweiten TIR-Teil (3, 4) übereinander aufweist, die so eingerichtet sind, dass Licht, welches durch die Lichteintrittsfläche (6) eintritt und auf den ersten TIR-Teil (3) des Doppel-TIR-Teils auftrifft, hintereinander an dem ersten TIR-Teil (3) und an dem zweiten TIR-Teil (4) totalreflektiert wird, bevor das Licht die Linse verlässt.

## Beschreibung

Die vorliegende Erfindung betrifft eine Leuchte, insbesondere eine Innenraumleuchte, im speziellen für die Beleuchtung einer Wand oder Tafel, sowie eine Linse, welche in der Leuchte vorgesehen ist.

Zur Beleuchtung einer Wand oder Tafel durch eine in der Decke eingelassene Leuchte ist es wichtig, dass die zu beleuchtende Fläche auf der Wand oder Tafel möglichst direkt auf der Höhe der Leuchte beginnt. Wenn die Leuchte als Einbauleuchte in der Decke integriert ist, muss ein Teil des Lichts der Leuchte nahezu parallel zu der Decke abgegeben werden, um auch die Fläche auf der Wand oder Tafel angrenzend an der Decke auszuleuchten. Die Leuchte benötigt daher eine extrem breit strahlende Lichtverteilung.

Im Stand der Technik sind für diese Art von Wand- oder Tafelbeleuchtungen Lösungen üblich, die mit Reflektoren und/oder Linsen die breitstrahlende Lichtverteilungskurve erzeugen. Jedoch stellt sich das Problem, dass selbst eine breitstrahlende Leuchte nicht genügend Licht fast parallel zu der Decke abgeben kann, um die Wand oder Tafel beginnend an der Decke gleichmäßig auszuleuchten. In der Regel müssen die Leuchten daher von der Decke abgehängt sein oder es müssen Teile der Leuchte aus der Einbauöffnung hervorstehen, um die gewünschte Lichtverteilung zu erzeugen.

Ferner besteht mit den Lösungen im Stand der Technik ein Problem darin, dass die zur Wand- oder Tafelbeleuchtung eingerichteten Leuchten ein vollkommen anderes Erscheinungsbild aufweisen, als die Leuchten, die in Form von Downlights mit einer tiefstrahlenden Lichtverteilungskurve die Raummitte ausleuchten. Es ist jedoch aus architektonischen Gründen häufig gewünscht, eine möglichst gleich aussehende Leuchtenserie zu verwenden, welche in die Decke integriert werden kann und dabei aber die verschiedenen Aufgaben, d. h. als Wandbeleuchtung oder als Downlight, ausführen können.

Aufgabe der Erfindung ist es daher, eine Leuchte bereit zu stellen, welche eine gleichmäßige Wand- oder Tafelausleuchtung beginnend ab dem Übergang zur Decke ermöglicht und die sich im optischen Erscheinungsbild von anderen Innenraumleuchten, die als Downlight ausgebildet sind, nicht abhebt.

Gelöst wird das Problem durch eine Linse nach Anspruch 1 sowie durch eine Leuchte mit der entsprechenden Linse nach Anspruch 9.

Für die Beleuchtung der Wand oder Tafel in dem Bereich unmittelbar oder nahe angrenzend zur Decke ist eine sehr starke Lichtablenkung notwendig, während für die Beleuchtung der tiefer liegenden Wand- oder Tafelabschnitte ein geringerer Ablenkwinkel benötigt wird. Diese Lichtverteilung wird erfindungsgemäß durch eine besondere Form einer Linse erzeugt, welche die notwendigen Ablenkwinkel erzielt und dabei sogar noch vollständig innerhalb einer Leuchte, z.B. auch Deckenbündig, angeordnet sein kann. Erfindungsgemäß umfasst die Linse wenigstens drei verschiedene Bereiche. Ein zentraler Bereich bildet eine Lichtaustrittsfläche für einen Lichtdirektaustritt ohne vorherige Totalreflektion. Dieser wirkt ähnlich wie ein herkömmliches Downlight. Der Rand um die Lichtaustrittsfläche zum Lichtaustritt ohne Totalreflexion ist umgeben von zwei verschiedenen TIR-Teilen (TIR steht für total internal reflection). Ein erster runder TIR-Teil ist so eingerichtet, dass das Licht an einer Oberfläche des TIR-Teils einmal totalreflektiert wird, bevor es aus einer Lichtaustrittsfläche des runden TIR-Teils austritt. Ferner sieht die Linse auf der dem runden TIR-Teil gegenüberliegenden Randbereich einen Doppel-TIR-Teil vor. Dieser umfasst übereinander (d.h. hintereinander in einer Richtung parallel zur optischen Achse der Linse) einen ersten TIR-Teil und einen zweiten TIR-Teil, die jeweils eine Oberfläche zur Totalreflexion aufweisen. Das Licht, welches den Doppel-TIR-Teil der Linse verlässt wird daher zweifach totalreflektiert. Dadurch kann das Licht um fast 180° abgelenkt werden. Dieser Lichtanteil kann benutzt werden, um den Wandbereich angrenzend an der Decke auszuleuchten, während der Lichtanteil, welcher aus dem runden TIR-Teil der Linse austritt zur Beleuchtung der tieferen Wandabschnitte dient. Schließlich steht das Licht aus der Lichtaustrittsfläche ohne Totalreflexion für die Beleuchtung der sehr tiefen Wandabschnitte oder dem Bodenbereich vor der Wand zur Verfügung. Der TIR-Teil, an welchem nur die einfache Totalreflexion stattfindet, ist rund ausgebildet, um dadurch die Wand in der Breite gut ausleuchten zu können. Es ist dabei zu verstehen, dass sich die verschiedenen Lichtanteile aus der Lichtaustrittsfläche ohne Totalreflexion und aus dem runden TIR-Teil und dem doppelten TIR-Teil nach dem Lichtaustritt aus der Leuchte, in welcher die Linse integriert ist, auch überschneiden, eine gleichmäßige Ausleuchtung der angrenzenden Wand von der Decke bis zum Boden zu ermöglichen. Die Asymmetrie der Linse ergibt sich aus den unterschiedlich geformten TIR-Teilen innerhalb der Linse, die sich in der Linse um die zentral angeordnete Lichtaustrittsfläche zur Lichtabgabe ohne Totalreflexion gegenüberstehen.

Gemäß einer bevorzugten Ausführungsform umfasst der runde TIR-Teil wenigstens 120°, vorzugsweise mehr als 180° des Umfangrands der Lichtaustrittsfläche für den Lichtichtaustritt ohne Totalreflexion. Dadurch lässt sich ein verhältnismäßig breiter Wandabschnitt gleichmäßig ausleuchten.

Gemäß einer bevorzugten Ausführungsform umfasst der Doppelt-TIR-Teil weniger als 180°, vorzugsweise weniger als 120° des Randbereichs der Lichtaustrittsfläche 7 für Direktlichtaustritt. Der Lichtaustritt aus dem Doppelt-TIR-Teil wird im Wesentlichen nur für die Beleuchtung des deckennahen Wandabschnitts in der Nähe der Leuchte benötigt. Daher ist der Lichtanteil, der diesen Raumbereich abgegeben werden soll, gegenüber den anderen Lichtanteilen viel kleiner. Demgemäß ist bevorzugt, dass der Doppel-TIR-Teil einen viel kürzeren Teil des Umfangs als der runde TIR-Teil einnimmt.

Gemäß einer bevorzugten Ausführungsform ist der Doppelt-TIR-Teil so eingerichtet, dass Licht, welches von der Lichteintrittsfläche in die Linse eintritt und auf den Doppel-TIR-Teil der Linse auftrifft, durch Lichtbrechung und die zweifache Totalreflexion an dem ersten TIR-Teil und dem zweiten TIR-Teil um wenigstens 160° abgelenkt wird, bevor es aus der Linse wieder austritt. Der große Ablenkwinkel wird erst durch die zweifache Totalreflexion ermöglicht und bietet den Vorteil, dass sogar eine Leuchte, die vollständig in der Decke integriert ist und über den Deckenausschnitt nicht hervorsteht, mit einer derartigen Linse den deckennahen Wandbereich ausleuchten kann.

Gemäß einer bevorzugten Ausführungsform weist der erste TIR-Teil eine Oberfläche für Totalreflexion auf, die in einem Querschnitt durch die Linse entlang einer optischen Achse der Linse eine Tangente aufweist, die eine positive Steigung gegenüber der optischen Achse festlegt, und der zweite TIR-Teil weist eine Oberfläche zur Totalreflexion auf, die in dem besagten Querschnitt eine Tangente aufweist, die gegenüber der optischen Achse eine negative Steigung besitzt. Die beiden Tangenten an den Oberflächen des Doppel-TIR-Teil, an welchen die beiden Totalreflexionen stattfinden, bilden demnach mit der optischen Achse der Linse, welche senkrecht durch den mittleren Abschnitt der Linse verläuft, ein Dreieck. Durch diese Anordnung ist es möglich, die Lichtstrahlung in dem Doppel-TIR-Teil um einen sehr großen Winkel abzulenken, ohne dass ein Reflektor hierfür notwendig ist.

Gemäß einer bevorzugten Ausführungsform weist der runde TIR-Teil eine Oberfläche für die einfache Totalreflexion auf, die in einem Querschnitt senkrecht durch eine optische Achse der Linse eine Tangente mit einer positiven Steigung gegenüber der optischen Achse besitzt. Dadurch ist der Lichtanteil, der die Lichtaustrittsfläche des runden TIR-Teil verlässt, mit einem kleineren Winkel in Richtung zur optischen Achse abgelenkt, sodass sich dieser Lichtanteil für die Beleuchtung der weiter entfernten Wandabschnitte eignet.

Gemäß einer bevorzugten Ausführungsform weist die Lichtaustrittsseite für Lichtaustritte ohne Totalreflexion und/oder eine Oberfläche des zweiten TIR-Teils, in welchem die zweite Totalreflexion in dem Doppel-TIR-Teil stattfindet, eine Oberflächenstrukturierung auf, vorzugsweise eine Mikrostrukturierung, welche das austretende Licht statistisch gegenüber einer jeweiligen Hauptabstrahlrichtung ablenken. Dadurch wird das austretende Licht etwas aufgestreut, sodass die Lichtanteile sich vermischen und die Wandabschnitte homogen ausleuchten können.

Gemäß einer bevorzugten Ausführungsform weist die Lichtaustrittsfläche zum Lichtaustritt ohne Totalreflexion, und/oder Lichtaustrittsflächen des runden TIR-Teils und/oder des Doppel-TIR-Teils eine strukturierte Oberfläche auf, insbesondere bilden sie aneinander liegende Kugeloberflächen, welche das austretende Licht zur Farbmischung gegenüber der jeweiligen Hauptabstrahlrichtung der betreffenden Lichtaustrittsflächen ablenken. Durch die starken Ablenkwinkel in der Linse kann das austretende Licht spektral aufgespaltet sein. Durch die Oberflächenstrukturierung aller Lichtaustrittsflächen kann diese spektrale Aufspaltung zurückgeführt werden. Die Oberflächenstrukturierung kann beispielsweise Mikrometer Bereich oder Millimeterbereich liegen und durch aneinandergrenzende sich erhebende oder sich vertiefende Kugeloberflächen (Radius <1 mm) gebildet sein.

Gemäß einem weiteren Aspekt umfasst die Erfindung eine Leuchte mit einem Reflektor, einer asymmetrischen Linse gemäß einer der vorhergehenden Ausführungsformen und einer Lichtquelle, insbesondere einer LED oder einem LED-Cluster. Die erfindungsgemäße Leuchte kann insbesondere als Einbauleuchte ausgebildet sein, welche dafür bestimmt ist, vollständig in einer Deckeneinbauöffnung integriert zu werden. Diese Einbauform ist für tiefstrahlende Downlights üblich. Durch die erfindungsgemäße Linse können die Leuchten die äußere Erscheinungsform solcher Downlights annehmen, obwohl sie eine ganz andere Lichtverteilungscharakteristik aufweist.

Gemäß einer bevorzugten Ausführungsform definiert der Reflektor einen äußeren Rand der Leuchte, über welchen kein Teil der asymmetrischen Linse übersteht. Die Leuchte ist daher vollständig in die Decke integrierbar. Erst die erfindungsgemäße Linse ermöglicht es, dass eine solche Leuchte auch zur gleichmäßigen Wandbeleuchtung geeignet ist.

Gemäß einer bevorzugten Ausführungsform weist der Reflektor eine Reflektor-Innenwand auf, welche um die asymmetrische Linse angeordnet ist, wobei die asymmetrische Linse und der Reflektor gegeneinander so ausgerichtet sind, dass maximal 5% oder 2% des von der Linse abgegebenen Lichts auf die Reflektor-Innenwand auftrifft. Idealerweise trifft überhaupt kein Licht auf die Reflektor-Innenwand auf und es handelt sich bei dem Reflektor auch nur um ein dekoratives Element, welches für die Lichtlenkung keine Rolle spielt. Der Reflektor als Lichtlenkmittel wird in der erfindungsgemäßen Leuchte nicht benötigt, weil die Lichtumlenkung vollständig durch die Linse erfolgt und ferner so gestaltet ist, dass das Licht der Linse die Leuchte bereits verlässt, bevor Lichtstrahlung (abgesehen von einem möglicherweise geringen Streulichtteil) nicht auf den Reflektor auftrifft.

Gemäß einer bevorzugten Ausführungsform ist der Reflektor als Rasterreflektor ausgebildet und in jedem der Raster ist jeweils eine der asymmetrischen Linsen angeordnet. Abgesehen von ästhetischen Gründen hat diese Ausführungsform den Vorteil, dass mehr Licht zur Beleuchtung der Wand zur Verfügung steht.

Gemäß einer bevorzugten Ausführungsform ist die Ausrichtung der asymmetrischen Linsen in jedem der Raster gleich und insbesondere die Doppel-TIR-Teile der asymmetrischen Linsen parallel entlang einer Längsseite der Leuchte angeordnet sind. In dieser Ausführungsform sind die Doppel-TIR-Teile der mehreren Linsen parallel zur Wand angeordnet, sodass sich die entstehende Lichtverteilung der gesamten Leuchte zur Beleuchtung eines angrenzenden Wandabschnitts eignet.

Weitere Vorteile und Merkmale der vorliegen Erfindung ergeben sich aus der nachfolgenden Beschreibung bevorzugter Ausführungsformen, die in Verbindung mit den Figuren angegeben wird. In Figuren ist folgendes dargestellt:
- Figur 1: zeigt einen Querschnitt durch eine Linse einer Ausführungsform der Erfindung.
- Figur 2: zeigt den Querschnitt wie Figur 1 mit Lichtstrahlen.
- Figur 3: zeigt den Querschnitt wie Figur 1 mit Lichtstrahlen, die einfach oder zweifach totalreflektiert werden.
- Figur 4: zeigt eine perspektivische Ansicht der Linse auf die Lichtaustrittsflächen.
- Figur 5: zeigt eine perspektivische Ansicht der Linse auf die Lichteintrittsfläche. Absatzfigur 6 zeigt eine perspektivische Ansicht eines Abschnitts einer Leuchte gemäß einer Ausführungsform.
- Figur 7: zeigt eine Aufsicht auf die Leuchte der Figur 6.
- Figur 8: zeigt einen Querschnitt senkrecht zur Längserstreckung der Leuchte der Figuren 6 und 7.

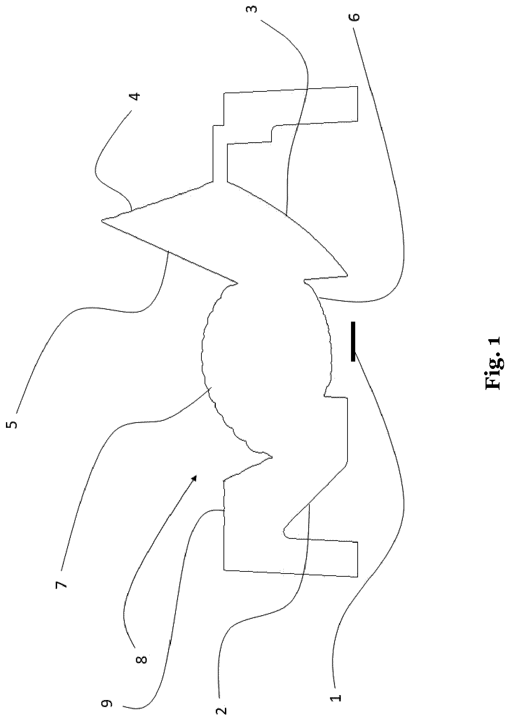

Die Figur 1 zeigt den Querschnitt durch eine asymmetrische Linse 8 ohne Reflektor. Dabei ist eine LED bzw. ein LED-Cluster 1 gezeigt, welches in der Mitte zwischen einem rundem TIR-Teil 2 und einem ersten TIR-Teil 3 eines Doppel-TIR-Teil angeordnet ist. Oberhalb der LED 1 befindet sich eine Lichteintrittsfläche 6 der Linse 8 und darüber eine Lichtaustrittsfläche 7 aus der die Strahlen ohne Totalreflexion austreten. Die Strahlen, die an einer Außenfläche des runden TIR-Teil 2 totalreflektiert werden, treten aus einer Lichtaustrittsfläche 9 des runden TIR-Teil 2 aus.

Die Strahlen, die an einer Außenfläche des ersten TIR-Teil 3 totalreflektiert werden, werden dann am zweiten TIR-Teil 4 ein zweites Mal in der Linse totalreflektiert und treten dann bei der Lichtaustrittsfläche 5 des Doppel-TIR-Teil aus. Die Außenfläche des zweiten TIR-Teils 4 kann dabei Strukturen aufweisen um eine bessere Mischung zwischen den Strahlen aus den Lichtaustrittsflächen 5 und 7 zu erhalten.

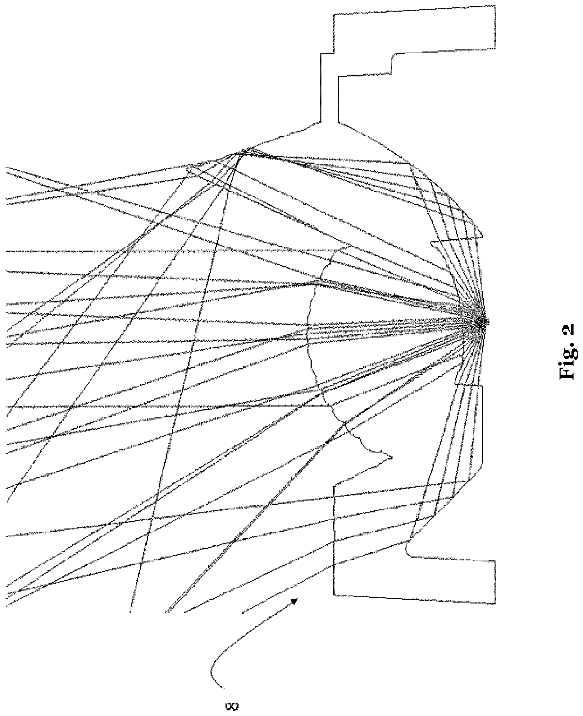

Die Figur 2 zeigt die asymmetrische Linse 8 aus Figur 1 mit den durch die Linse gehenden Strahlen, ausgehend von der LED. Durch Strukturen auf den Lichteintritts- und Lichtaustrittsflächen kreuzen sich teilweise die Strahlen. Dies sorgt für eine bessere Mischung des von allen drei verschiedenen Lichtaustrittsflächen abgegeben Lichts und einer gleichmäßigeren Beleuchtung an der Wand bzw. Tafel.

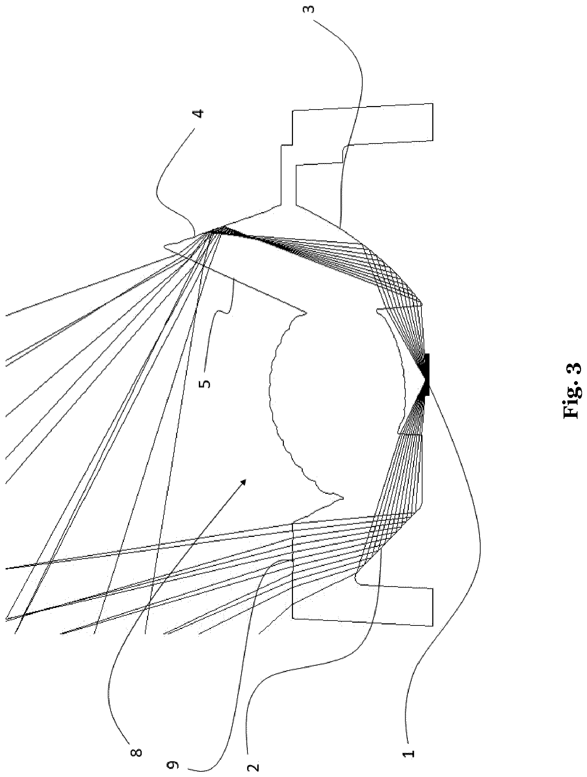

Die Figur 3 zeigt die asymmetrische Linse 8 aus nur mit den Strahlengängen, die über Totalreflexion abgelenkt werden. Die Figur zeigt dabei deutlich, dass ein Teil der Strahlen doppelt totalreflektiert werden. Zuerst am ersten TIR-Teil 3 und dann am zweiten TIR-Teil 4. Über die Lichtaustrittsfläche 5 des Doppel-TIR-Teil tritt das Licht aus der Linse heraus und beleuchtet die Wand direkt unterhalb der Leuchte. Durch die doppelte Totalreflexion wurde die Ausstrahlrichtung des Lichtes um fast 170° gedreht. Dies ist wichtig, da die Linse hauptsächlich nur in eine Richtung (gegen eine Wand/Tafel) strahlen soll.

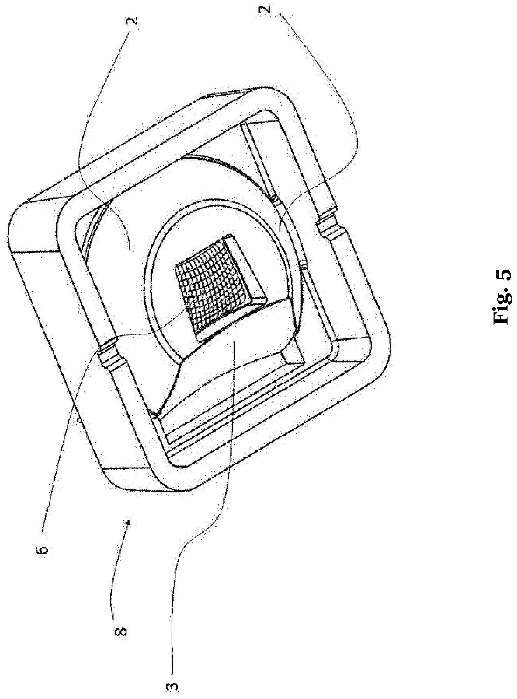

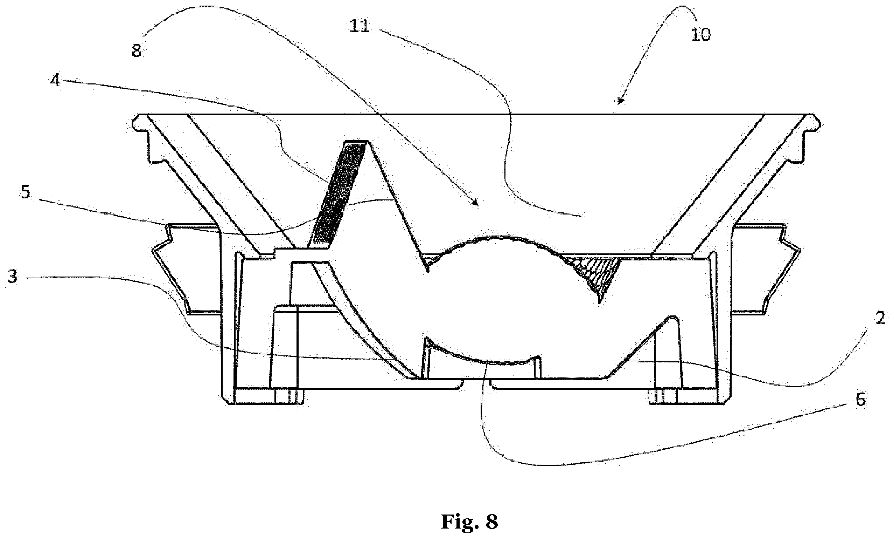

Ebenfalls ist die Totalreflexion am runden TIR-Teil 2 zu erkennen. Dabei wird das Licht nur einmal totalreflektiert und tritt dann an der Lichtaustrittsfläche 9 aus. Der TIR-Teil 2 ist rund, weil dieser TIR-Teil 2 fast ringsherum um die LED 1 bzw. die optische Achse das Linse 8 verläuft (zu sehen in Figur 5). Dieser Teil ist für die Effizienz des Systems (siehe Figur 8) mit einem Reflektor 10 sehr wichtig, da das gesamte Licht der LED die Reflektoröffnung des Reflektors 10 verlassen kann, ohne die zur Linse 8 weisenden Reflektor-Innenwand 11 zu berühren.

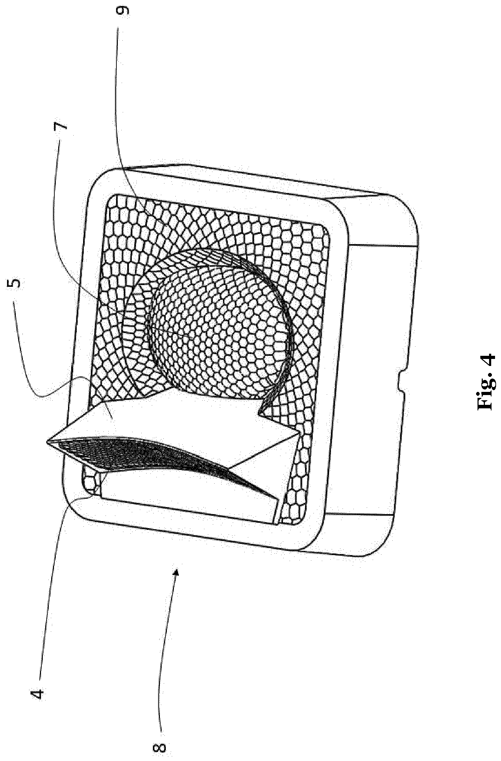

Die Figur 4 zeigt perspektivisch den dreidimensionalen Aufbau der asymmetrischen Linse 8 mit allen Lichtaustrittsflächen 9, 7, 5 und dem zweiten TIR-Teil 4. Zur besseren Farbmischung weisen alle Lichtaustrittsflächen 9, 7, 5 Strukturen auf. Diese Strukturen sind durch lauter aneinander gesetzte Kugeln gebildet. Die Strukturen können im Millimeter- oder Mikrometerbereich liegen.

Die Figur 5 zeigt ebenfalls perspektivisch den dreidimensionalen Aufbau der asymmetrischen Linse 8 mit der Lichteintrittsflächen 6 und den ersten TIR-Teilen 3. Deutlich zu sehen ist, dass der runde TIR-Teil 2 sich um mehr als 180° um die LED angeordnet ist, während der Doppel-TIR-Teil weniger als 120° des umlaufenden Randes einnimmt.

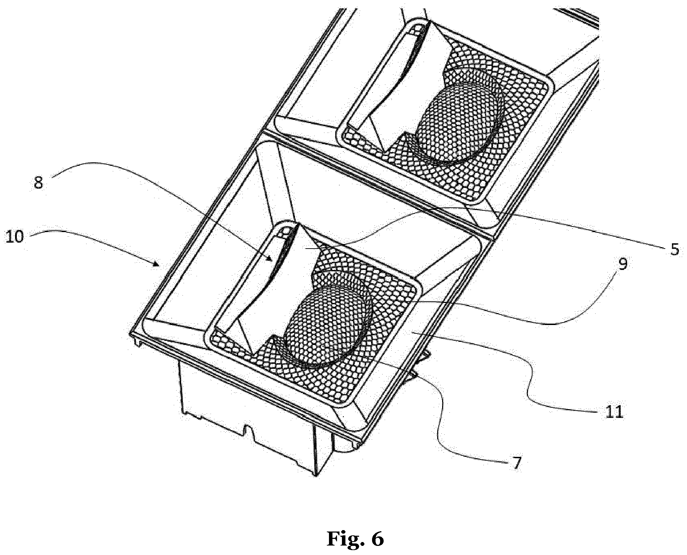

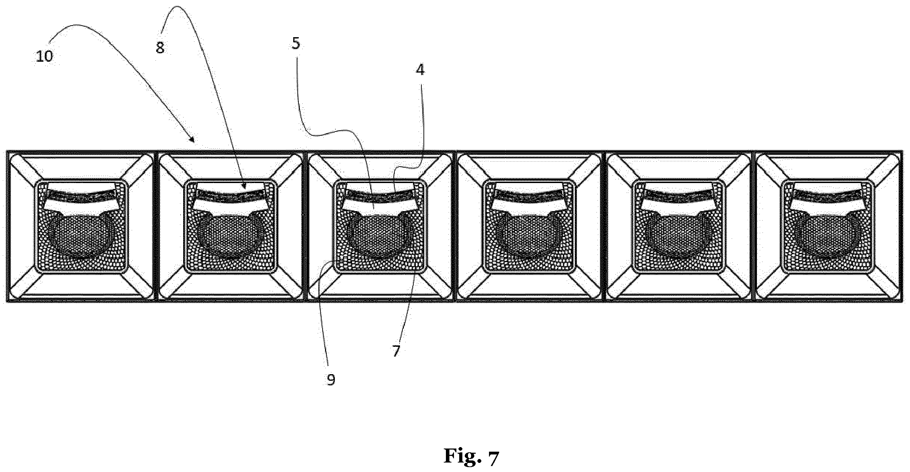

Die Figur 6 zeigt das kombinierte System von Reflektor 10 und asymmetrischer Linse 8 in einer Arrayanordnung (besser in Figur 7 zu sehen). Dabei ist der Reflektor 10 als ein Rasterreflektor ausgebildet, welcher in einer Reihe mehrere Lichtaustrittsöffnungen mit jeweils einer Linse 8 aufweist. Die mehreren Linsen 8 können in einem Stück zusammengefasst sein, über die als auch der ebenfalls einem Stück bestehende Rasterreflektor angeordnet ist. Die Figur 7 zeigt ein solches 6er Array des Reflektors 10 als auch der asymmetrischen Linse 8. Gemäß alternativen Ausführungsformen kann der Rasterreflektor auch die Form einer Matrix, d. h. ein Array von mehreren parallelen Reihen von Lichtaustrittsöffnungen, aufweisen.

Die Figur 8 zeigt den Querschnitt durch die asymmetrische Linse 8 und dem Reflektor 10. Dabei ragt die Linse nicht über einen äußeren Rand des Reflektors 10, in der die Reflektoröffnung definiert, hinaus. Da gemäß der bevorzugten Ausführungsform praktisch kein Licht (höchsten Streulicht mit weniger als 5 % oder 2 %) auf die Reflektor-Innenwand 11 auftrifft, ist die Reflektor-Innenwand 11 dabei nur dekorativ und reflektiert keine Strahlen der Linse oder LED. Daher kann der Reflektor verschiedene Farben oder Beschichtungen aufweisen oder sogar lichtabsorbierend sein. Die Reflektor-Innenwand 11 verleiht der Leuchte jedoch ein äußeres Erscheinungsbild wie eine Leuchte, die als Downlight mit einem herkömmlichen Reflektor und gegebenenfalls einer symmetrischen Linse ausgestattet ist.

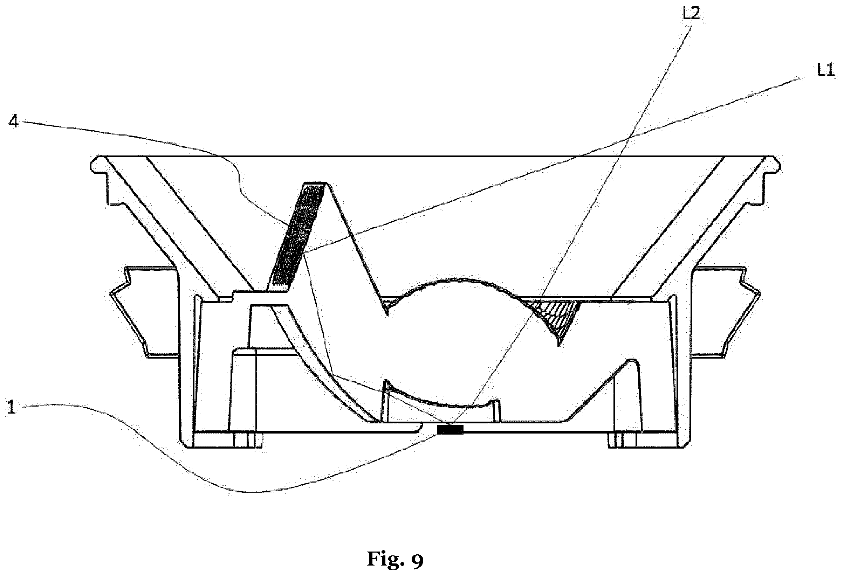

Die Figur 9 zeigt den Querschnitt aus Fig. 8 durch die asymmetrische Linse 8 und dem Reflektor 10 mit LED 1. Dabei ist ein Lichtstrahl L1 eingezeichnet, der an beiden TIR-Teilen des Doppel-TIR-Teil Linse 8 totalreflektiert wird. Dieser Lichtstrahl L1 trägt zur Beleuchtung einer Wand oder Tafel direkt unterhalb der Leuchte bei. Durch die Struktur an der zweiten TIR-Fläche 4 kann ein schöner Übergang zum Lichtstrahl L2 an der Wand oder Tafel erzielt werden. Der Lichtstrahl L1, der doppelt totalreflektiert wird, kann dabei flacher aus dem System austreten, als der Strahl L2 und ist daher geeignet, um tiefer liegende Flächen einer angrenzenden Wand oder Tafel zu beleuchten.

Zahlreiche Varianten der vorherigen beschriebenen Ausführungsform sind möglich. Insbesondere kann der Winkelanteil, den der Doppel-TIR-Teil am Rand der Linse einnimmt, gegenüber dem Winkelanteil, den der runde TIR-Teil am Rande Linse einnimmt, variieren. Bevorzugt umgreift der runde TIR-Teil jedoch einen vielen größeren Randbereich als der Doppel-TIR-Teil. Bevorzugt für die Ausführungsform der Erfindung ist es ferner, dass der runde TIR-Teil und der Doppel-TIR-Teil gemeinsam den vollständigen Umfang der Linse umgreifen, sodass alles Licht, welches von der Lichteintrittsfläche 6 in den Randbereich der Linse gelangt, entweder einfach oder doppelt total reflektiert wird.

### BEZUGSZEICHENLISTE

- 1: Lichtquelle z.B. LED oder LED-Cluster
- 2: runder TIR-Teil
- 3: erster TIR-Teil des Doppel-TIR-Teil
- 4: zweiter TIR-Teil des Doppel-TIR-Teil
- 5: Lichtaustrittsfläche des Doppel-TIR-Teil
- 6: Lichteintrittsfläche
- 7: Lichtaustrittsfläche ohne Totalreflexion
- 8: asymmetrische Linse
- 9: Lichtaustrittsfläche runder TIR-Teil
- 10: Reflektor
- 11: Reflektor-Innenwand
- L1: flacher Lichtstrahl doppelt an den TIR-Teilen totalreflektiert
- L2: Lichtstrahl ohne Totalreflexion

## Patentansprüche

1. Asymmetrische Linse (8) mit einer Lichteintrittsfläche (6) und einer gegenüberliegenden Lichtaustrittsfläche (7), die beide so geformt sind, dass ein Lichtanteil einer Lichtquelle, der in die Lichteintrittsfläche (6) eintritt, die Lichtaustrittsfläche (7) nach Lichtbrechung ohne Totalreflexion verlässt,
**dadurch gekennzeichnet, dass** die Lichtaustrittsfläche (7) ohne Totalreflexion umgeben ist von zwei unterschiedlich ausgebildeten Randbereichen, die für Totalreflexion eingerichtet sind,
wobei ein erster Randbereich einen runden Total Internal Reflection, TIR, -Teil aufweist, der gegenüber der Lichteintrittsfläche (6) so eingerichtet ist, dass Licht, welches durch die Lichteintrittsfläche (6) in die Linse eintritt und auf den runden TIR-Teil (2) auftrifft, nur einmal totalreflektiert wird, bevor das Licht die Linse verlässt, und
der zweite Randbereich einen Doppel-TIR-Teil mit einem ersten und zweiten TIR-Teil (3, 4) übereinander aufweist, die so eingerichtet sind, dass Licht, welches durch die Lichteintrittsfläche (6) eintritt und auf den ersten TIR-Teil (3) des Doppel-TIR-Teils auftrifft, hintereinander an dem ersten TIR-Teil (3) und an dem zweiten TIR-Teil (4) totalreflektiert wird, bevor das Licht die Linse verlässt.

2. Asymmetrische Linse (8) nach Anspruch 1, wobei der runde TIR-Teil (2) wenigstens 120°, vorzugsweise mehr als 180° des Randbereichs um die Lichtaustrittsfläche (7) für Direktlichtaustritt umfasst.

3. Asymmetrische Linse (8) nach einem der vorhergehenden Ansprüche, wobei der Doppelt-TIR-Teil (3, 4) weniger als 180°, vorzugsweise weniger als 120° des Randbereichs um die Lichtaustrittsfläche (7) für Direktlichtaustritt umfasst.

4. Asymmetrische Linse (8) nach einem der vorhergehenden Ansprüche, wobei der Doppelt-TIR-Teil (3, 4) so eingerichtet ist, dass Licht, welches von der Lichteintrittsfläche (6) in die Linse eintritt und auf den ersten TIR-Teil (3) des Doppel-TIR-Teil auftrifft, durch Lichtbrechung und die zweifache Totalreflexion an dem ersten TIR-Teil (3) und dem zweiten TIR-Teil (4) um wenigstens 160° abgelenkt wird, bevor es aus der Linse wieder austritt.

5. Asymmetrische Linse (8) nach einem der vorhergehenden Ansprüche, wobei der erste TIR-Teil (3) eine Oberfläche für Totalreflexion aufweist, die in einem Querschnitt durch die Linse entlang einer optischen Achse der Linse eine Tangente aufweist, die eine positive Steigung gegenüber der optischen Achse festlegt, und der zweite TIR-Teil (4) eine Oberfläche zur Totalreflexion aufweist, die in dem besagten Querschnitt eine Tangente aufweist, die gegenüber der optischen Achse eine negative Steigung aufweist.

6. Asymmetrische Linse (8) nach einem der vorhergehenden Ansprüche, wobei der runde TIR-Teil (2) eine Oberfläche zur Totalreflexion aufweist, die in einem Querschnitt durch die Linse entlang einer optischen Achse der Linse eine Tangente mit einer positiven Steigung gegenüber der optischen Achse aufweist.

7. Asymmetrische Linse (8) nach einem der vorhergehenden Ansprüche, wobei die Lichtaustrittsseite (7) für Lichtaustritte ohne Totalreflexion und/oder eine Oberfläche des zweiten TIR-Teils (4), in welcher die zweite Totalreflexion in dem Doppel-TIR-Teil stattfindet, eine Oberflächenstrukturierung aufweist, vorzugsweise eine Mikrostrukturierung, welche das austretende Licht gegenüber einer jeweiligen Hauptabstrahlrichtung statistisch ablenken.

8. Asymmetrische Linse (8) nach einem der vorhergehenden Ansprüche, wobei die Lichtaustrittsfläche (7) zum Lichtaustritt ohne Totalreflexion, und/oder Lichtaustrittsflächen des runden TIR-Teils und/oder des Doppel-TIR-Teils eine strukturierte Oberfläche aufweisen, insbesondere aneinander liegende Kugeloberflächen bilden, welche das austretende Licht zur Farbmischung gegenüber der jeweiligen Hauptabstrahlrichtung der betreffenden Lichtaustrittsflächen statistisch ablenken.

9. Leuchte mit einem Reflektor (10), einer asymmetrischen Linse (8) gemäß einem der vorhergehenden Ansprüche und einer Lichtquelle (1), insbesondere einer LED (1) oder einem LED-Cluster.

10. Leuchte nach Anspruch 9, wobei der Reflektor (10) einen äußeren Rand einer Lichtaustrittsöffnung der Leuchte definiert, und kein Teil der asymmetrischen Linse aus der Leuchte über die Lichtaustrittsöffnung übersteht.

11. Leuchte nach Anspruch 9 oder 10, wobei der Reflektor (10) eine Reflektor-Innenwand (11) aufweist, welche um die asymmetrische Linse in Richtung zu dieser angeordnet ist, wobei die asymmetrische Linse und der Reflektor so eingerichtet sind, dass maximal 5% des von der Linse abgegebenen Lichts auf die Reflektor-Innenwand (7) auftrifft.

12. Leuchte nach einem der Ansprüche 9 bis 11, wobei der Reflektor (19) als Rasterreflektor mit einer in einer Reihe oder in einer Matrix angeordneten Rastern, die jeweils eine Lichtaustrittsöffnung bilden, ausgebildet ist und in jedem der Raster jeweils eine der asymmetrischen Linsen nach einem der Ansprüche 1 bis 8 angeordnet ist.

13. Leuchte nach Anspruch 12, wobei die Ausrichtung der asymmetrischen Linsen in jedem der Raster gleich ist und die Doppel-TIR-Teile der asymmetrischen Linsen parallel entlang einer Längsseite der Leuchte angeordnet sind.
